# EUROPEAN PATENT APPLICATION

(11) **EP 4 672 537 A1**
(43) Date of publication of application: **31.12.2025**
(21) Application number: 25183879.3
(22) Date of filing: 18.06.2025
(51) Int. Cl.: H02J 3/00, G06F 1/30, G06F 1/3209, H02J 3/36, H02J 3/38, H02J 4/00, H02J 7/00, H02J 7/34, H02J 9/06

(54) **SMART UPS CONTROL FOR AI LOADS**

(30) Priority: 24.06.2024 US 202463663384 P; 05.05.2025 US 202519198664
(71) Applicant: Vertiv Corporation, Westerville, OH 43082 (US)
(72) Inventor: Heber, Brian, Westerville, 43082 (US); Bush, Terry, Westerville, 43082 (US)
(74) Representative: Cousens, Nico

(57) **Abstract**

A system may include a power component, the power component including at least one device processor configured to: obtain load data, wherein the load data comprises a power characteristic associated with at least one of a high-load element or a low-load element, obtain a trained power management artificial intelligence (AI) and/or machine learning (ML) model, based at least on the load data and the trained power management Al and/or ML model, infer a direct current (DC) link voltage adjustment, wherein the DC link voltage adjustment is correlated with a predicted load cycle parameter; and cause the power component to alter a DC link voltage from an initial level to an adjusted level based on the DC link voltage adjustment.

## Description

### REFERENCE TO RELATED APPLICATIONS

The present application claims priority to U.S. Provisional Patent Application Number 63/663,384, filed June 24, 2024.

### TECHNICAL FIELD

The present disclosure relates to power control systems for electronic equipment, and more particularly to power control for one or more components of a powertrain.

### BACKGROUND

Server farms often rely on one or more uninterruptible power supplies (UPS) to deliver power to each server. Many of these servers have variable loads, such as variable loads for servers used for data collection and training for artificial intelligence (Al) -based platforms. The variable loads are cyclic, often including a high-load element and a low-load element. For example, during data collection cycles, the power required by Al platforms is relatively small, with processors operating often running under less than the rated power level (e.g., a low-load element of 10% to 30% rated power). Once the data collection cycle is complete, a machine learning (ML) training process starts (e.g., a high-load element), with power used by processors reaching 100% of the rated power level and may even exceed the rated power level for short durations. The training process is then maintained for a period of time (e.g., 100 ms to 1 second) before the power drops back down to lower power levels, such as the lower power levels of the data collection cycle. These load cycles of high-load elements and low-load elements may last several minutes up to, and more than, several hours. Alternating between periods of load cycling are low-activity interim periods where the server processors operate consistently at low power.

Power to the server processors is maintained through these load fluctuations by the power components of the powertrain, such as the UPS, which rely on batteries to provide continuous power. Cycling of loads between high-load elements and low-load elements can cause repeated discharges, or discharge cycles, from the batteries that eventually deplete energy from the battery. Battery life in power components may be reduced as the number of discharge cycles increases. Therefore, there is a need for power components that reduce the number or severity of discharge cycles, particularly for power components that power variable loads, such as variable loads used by servers running Al-based applications.

### SUMMARY

Accordingly, the present disclosure is directed toward a power component, a system, and a method for controlling a DC link voltage of a power component, such as during a variable load.

In some aspects, the techniques described herein relate to a system including: a power component configured to provide power to a load, wherein the power provided to the load cycles between a high-load element and a low-load element, the power component including: at least one device processor configured to: obtain load data, wherein the load data includes a power characteristic associated with at least one of the high-load element or the low-load element; obtain a trained power management artificial intelligence (AI) and/or machine learning (ML) model; based at least on the load data and the trained power management Al and/or ML model, infer a direct current (DC) link voltage adjustment, wherein the DC link voltage adjustment is correlated with a predicted load cycle parameter; and cause the power component to alter a DC link voltage from an initial level to an adjusted level based on the DC link voltage adjustment.

In some aspects, the techniques described herein relate to a power component configured to provide power to a load, wherein the power provided to the load cycles between a high-load element and a low-load element, the power component including: at least one device processor configured to: obtain load data, wherein the load data includes a power characteristic associated with at least one of the high-load element or the low-load element; obtain a trained power management artificial intelligence (AI) and/or machine learning (ML) model; based at least on the load data and the trained power management Al and/or ML model, infer a direct current (DC) link voltage adjustment, wherein the DC link voltage adjustment is correlated with a predicted load cycle parameter; and cause the power component to alter a DC link voltage from an initial level to an adjusted level based on the DC link voltage adjustment.

In some aspects, the techniques described herein relate to a method for providing power to a load including: obtaining load data, wherein the load data includes a power characteristic associated with at least one of a high-load element or a low-load element; obtaining a trained power management artificial intelligence (AI) and/or machine learning (ML) model; based at least on the load data and the trained power management Al and/or ML model, inferring a direct current (DC) link voltage adjustment, wherein the DC link voltage adjustment is correlated with a predicted load cycle parameter; and causing a power component to alter a DC link voltage from an initial level to an adjusted level based on the DC link voltage adjustment.

It is to be understood that both the foregoing general description and the following detailed description are exemplary and explanatory only and are not necessarily restrictive of the present disclosure. The accompanying drawings, which are incorporated in and constitute a part of the specification, illustrate subject matter of the disclosure. Together, the descriptions and the drawings serve to explain the principles of the disclosure.

### BRIEF DESCRIPTION OF THE FIGURES

The detailed description is described with reference to the accompanying figures. The use of the same reference numbers in different instances in the description and the figures may indicate similar or identical items. Various embodiments or examples ("examples") of the present disclosure are disclosed in the following detailed description and the accompanying drawings. The drawings are not necessarily to scale. In general, operations of disclosed processes may be performed in an arbitrary order, unless otherwise provided in the claims.
FIG. 1A illustrates a block diagram of a power supply system for supplying power to a load, in accordance with one or more embodiments of the disclosure.
FIGS. 1B-1C illustrate block diagrams of a power component electrically coupled to a load, in accordance with one or more embodiments of the disclosure.
FIG. 2 illustrates a schematic of a power component, such as an uninterrupted power supply (UPS), in accordance with one or more embodiments of the disclosure.
FIG. 3 illustrates a graph depicting a server load profile, in accordance with one or more embodiments of the disclosure.
FIGS. 4A-4B illustrate graphs depicting a variable load period of a load output within a server load profile, in accordance with one or more embodiments of the disclosure.
FIG. 5A illustrates graphs depicting DC link voltage, load current, and output power, respectively, for a power supply that cannot anticipate a change in load from a low-load element to a high-load element at a time point in accordance with one or more embodiments of the disclosure.
FIG. 5B illustrates graphs depicting DC link voltage, load current, and output power, respectively, for a power component of the current disclosure that can anticipate a change in load from a low-load element to a high-load element at a time point, in accordance with one or more embodiments of the disclosure.
FIG. 6 illustrates a flowchart depicting a method for variable load detection, in accordance with one or more embodiments of the disclosure.
FIG. 7 illustrates a process flow diagram depicting a method for controlling a DC link voltage of a power component, in accordance with one or more embodiments of the disclosure.

### DETAILED DESCRIPTION

Before explaining one or more embodiments of the disclosure in detail, it is to be understood that the embodiments are not limited in their application to the details of construction and the arrangement of the components or steps or methodologies set forth in the following description or illustrated in the drawings. In the following detailed description of embodiments, numerous specific details may be set forth in order to provide a more thorough understanding of the disclosure. However, it will be apparent to one of ordinary skill in the art having the benefit of the instant disclosure that the embodiments disclosed herein may be practiced without some of these specific details. In other instances, well-known features may not be described in detail to avoid unnecessarily complicating the instant disclosure.

As used herein a letter following a reference numeral is intended to reference an embodiment of the feature or element that may be similar, but not necessarily identical, to a previously described element or feature bearing the same reference numeral (e.g., 1, 1a, 1b). Such shorthand notations are used for purposes of convenience only and should not be construed to limit the disclosure in any way unless expressly stated to the contrary.

Further, unless expressly stated to the contrary, "or" refers to an inclusive or and not to an exclusive or. For example, a condition A or B is satisfied by any one of the following: A is true (or present), and B is false (or not present), A is false (or not present) and B is true (or present), and both A and B are true (or present).

In addition, the use of "a" or "an" may be employed to describe elements and components of embodiments disclosed herein. This is done merely for convenience and "a" and "an" are intended to include "one" or "at least one," and the singular also includes the plural unless it is obvious that it is meant otherwise.

Finally, as used herein any reference to "one embodiment" or "embodiments" means that a particular element, feature, structure, or characteristic described in connection with the embodiment is included in at least one embodiment disclosed herein. The appearances of the phrase "in embodiments" in various places in the specification are not necessarily all referring to the same embodiment, and embodiments may include one or more of the features expressly described or inherently present herein, or any combination or sub-combination of two or more such features, along with any other features which may not necessarily be expressly described or inherently present in the instant disclosure.

Disclosed is a power supply system, such as a power supply system for a data center, power components, and a method for controlling the power supply system based on anticipated or predicted power loads, such as Al/ML loads of server processors. The power supply system may include one or more power components (e.g., switches and/or power units) as part of a powertrain. One or more power components may include at least one device processor configured to obtain power output data and obtain a trained power management artificial intelligence Al and/or machine learning (ML) model. The power component is also configured to infer a DC link voltage adjustment based on the power output data and the power management Al/ML model and cause the power component to alter a DC link voltage from an initial level to an adjusted level based on the DC link voltage adjustment. The power output data includes power characteristics associated with a high-load element and/or a low-load element of a load. The high-load element is a period of high load by server processors, such as the high load incurred during a machine process. The low-load element is a period of low load by the server processors, such as during a data collection process. The device processor then utilizes the trained power management Al/ML model along with the power output data to predict when the server processor will require power for operating under the high-load element and/or the low-load element, and, based on that prediction, infer a direct current (DC) link voltage adjustment for the power component and/or other components of the power supply system. For example, the trained power management AI/ML model may infer that a DC link voltage should be raised in anticipation of a predicted high-load element. The power component may then alter (e.g., via a rectifier) the DC link voltage based on the DC link voltage adjustment. By raising the DC link voltage in anticipation of a predicted high-load element, the system may reduce the number and severity of battery discharges, may increase battery life, and may reduce a need to derate Al loads to prevent battery discharges.

Embodiments of the present disclosure are particularly advantageous for power control of one or more components of the power supply system (e.g., including, but not limited to, a static transfer switch (STS), power distribution unit (PDU), power shelf, rack power distribution unit, and uninterrupted power supply (UPS) systems) that power electronic systems used for training server-based Al/ML models. These electronic systems have load cycles, or pulses, of high-load elements and low-load elements that can cause battery discharges that reduce battery life. By using Al/ML-trained models to predict the cycling of variable loads, DC link voltages can be adjusted to anticipate high-load elements and low-load elements, reducing the number and/or severity of battery discharges.

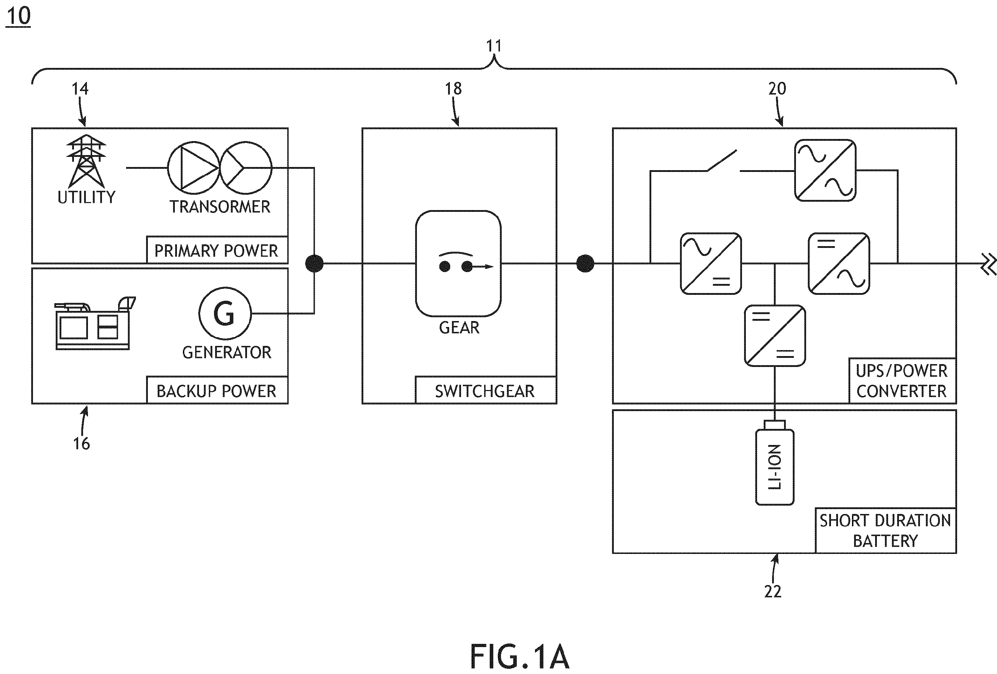

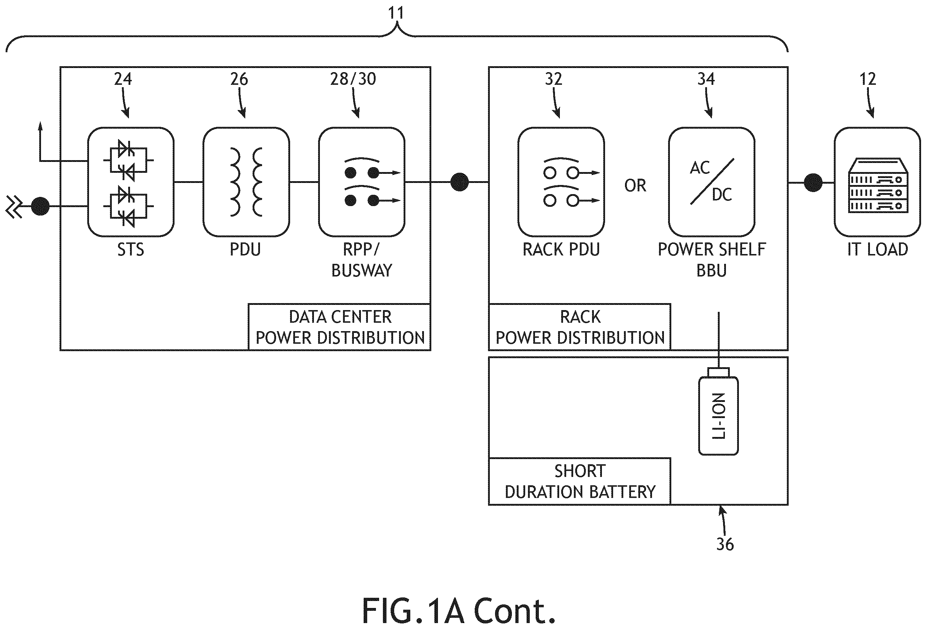

FIG. 1A illustrates a block diagram of a power supply system 10 (e.g., a powertrain) for supplying power to a load 12, in accordance with one or more embodiments of the disclosure. Power for the power supply system 10 may originate from a utility power 14 or generator power 16. The power supply system 10 includes one or more power components 11. For example, the power supply system 10 may include one or more switchgears 18 that receive utility power 14 or generator power 16 and one or more UPSs 20 that receive power from the one or more switchgears 18 or other power sources. The UPS 20 may cause the power to be stored in a UPS battery 22, or send power through one or more components to support the load 12. These components include, but are not limited to, an STS 24, a PDU 26, a remote power panel 28, a busway 30, a rack PDU 32, a power shelf 34, and a backup battery 36.

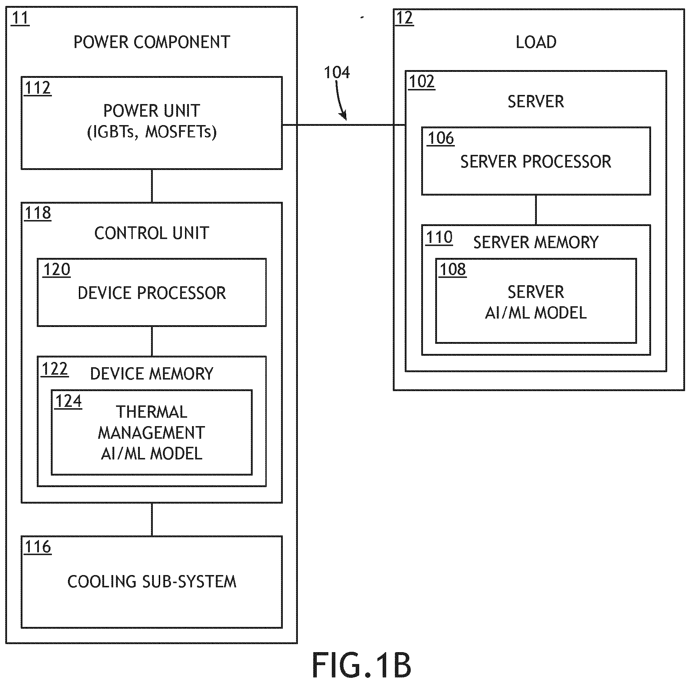

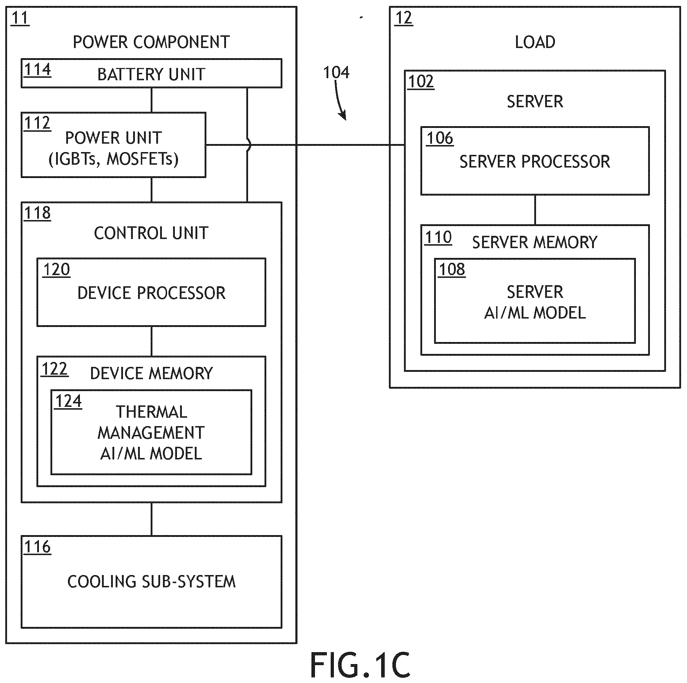

FIGS. 1B-1C illustrate block diagrams of a power component 11 electrically coupled to a load 12 (e.g., a server), in accordance with one or more embodiments of the disclosure. The power component 11 may include any device capable of delivering electrical power including, but not limited to, the UPS 20, the STS 24, the PDU 26, the remote power panel 28, rack PDU 32, and the power shelf 34. The power component 11 may be coupled to the load 12 (e.g., one or more servers 102) via a critical bus 104. The critical bus 104 facilitates the delivery of a critical load to the one or more servers 102. The one or more servers 102 use the critical load to power one or more server processors 106. The one or more server processors 106 may be used for any computing process and may require a variable load. For example, the one or more server processors 106 may be configured to obtain, build, and/or train a server AI/ML model 108 stored in a server memory 110, processes that often result in variable loads. While a generalized power component 11 is illustrated in FIG. 1B, a power component configured as a power supply (e.g., a UPS) as illustrated in FIG. 1C.

In embodiments, the power component 11 includes a power unit 112. The power unit 112 provides power conversion and/or distribution for the power component 11 as power is transferred to the load. The power unit 112 may include one or more power conversion devices including, but not limited to, rectifiers, and inverters. In embodiments, the power component 11 may include a battery 114 for receiving power from the power unit 112 and transmitting power to the one or more servers 102. The battery 114 may be communicatively coupled to the control unit 118 (e.g., the battery 114 may be configured to send charging data to the control unit 118).

In embodiments, the power component 11 includes a control unit 118. The control unit 118 may be communicatively coupled to one or more of the battery 114, and the power unit 112. The control unit is configured to perform one or more functions as described within this disclosure. The control unit 118 includes one or more device processors 120 and device memory 122. In embodiments, the one or more device processors 120 are configured to obtain, build, and/or train a power management Al/ML model 124 stored in the device memory 122. For example, the one or more device processors 120 may be configured to obtain power output data (e.g., data associated with power transmitted by the power component 11 to the one or more servers 102). In another example, the one or more device processors 120 may be configured to, based on the power output data and the trained power management AI/ML model, infer a direct current (DC) link voltage adjustment, wherein the DC link voltage adjustment is correlated with a predicted load cycle parameter, such as a predicted high-load element start time.

As used herein, a "DC link voltage", also referred to as DC voltage, refers to a parameter in electrical systems, particularly those that involve power conversion or transmission. For example, the DC link voltage may refer to the voltage level maintained between the positive and negative terminals of a DC (Direct Current) power source or energy storage system. In another example, the DC link voltage may refer to the voltage level maintained between two terminals within a power component 11. In another example, DC link voltages are intermediary voltages that power converters operate with, ensuring smooth energy transfer and conversion. In another example, batteries, capacitors, and other energy storage devices in DC systems have a specific voltage range at which they operate efficiently, with the DC link voltage corresponding to the voltage level these systems are designed to operate within. As disclosed herein, a dynamic DC link voltage that adjusts to variable loads provides increased overall stability and performance of the system 10.

Adjusting (e.g., raising) DC link voltage before a change in load may be important in electrical systems, particularly in systems employing power converters or inverters. For example, in power systems with battery backup, load steps, such as large load steps, may cause the power system to momentarily use power from the battery 114. Repetitive load steps may then cause the battery 114 to discharge over time, with multiple discharge cycles reducing the lifespan of the battery 114.

In another example, sudden changes in load without adjusting the DC link voltage can cause instability in the system. By raising the DC link voltage beforehand, a buffer is provided that smoothly accommodates the change in load, which assists in maintaining stability in the system. For instance, upon a sudden change in load, transient voltage dips and spikes may occur. Raising the DC voltage can help mitigate these transients by providing extra headroom for the system to adjust. Raising the DC voltage may also help limit inrush current that occurs when the load is suddenly applied, potentially preventing damage to components. Further, raising the DC voltage link before a change or increase in load may improve the efficiency of the system 10. By providing a higher voltage, the amount of current required to deliver the same amount of power to the load is reduced.

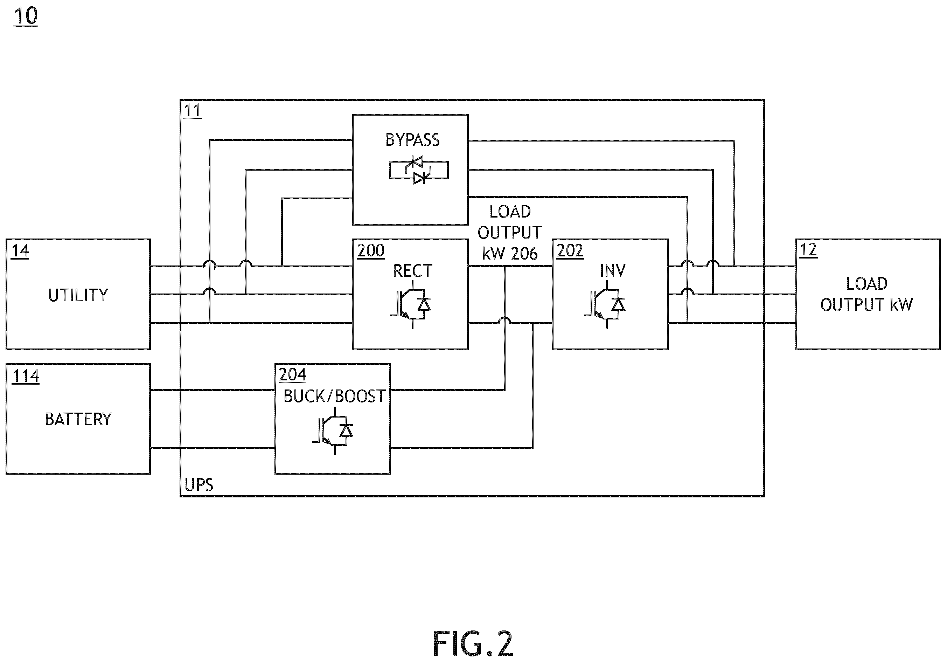

FIG. 2 illustrates a schematic of a power component 11, such as an uninterrupted power supply (UPS), in accordance with one or more embodiments of the disclosure. The power component 11 receives an input power, such as utility power 14, and delivers power to the load 12. Input power is converted via one or more rectifiers 200 and/or inverters 202 to a form usable by the load 12. Input power is also received and released by the one or more batteries 114, which may be further converted via one or more buck-boost converters 204. The power component 11 may further include a bypass switch that detects changes (e.g., drops) in voltage that indicate a failure of the inverter 202 or other power component element and switches power from the power component 11 to utility power or other power source for powering the load 12.

In embodiments, the power component 11 includes a DC link voltage 206 between two elements of the power component 11 that can be adjusted (e.g., via the one or more device processors 120 or other device circuitry. For example, the power component 11 may include a DC link voltage between one of the one or more rectifiers 200 and one of the one or more inverters 202. In another example, the power component 11 may include a DC link voltage 206 between one of the one or more rectifiers 200 and the load 12.

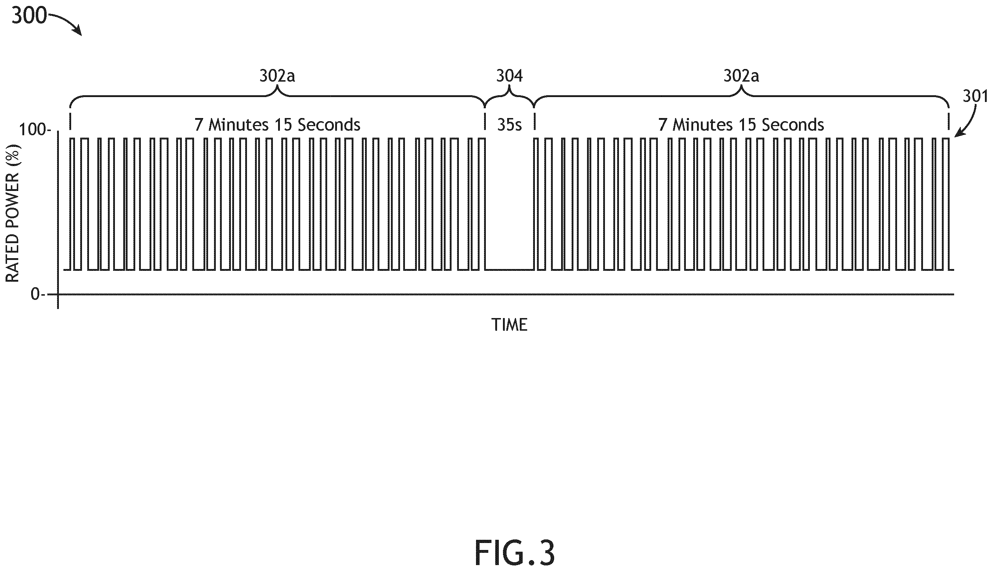

FIG. 3 illustrates a graph 300 depicting a server load profile, in accordance with one or more embodiments of the disclosure. The graph 300 illustrates a percentage of rated power used by the server processors 106 over time (e.g., a load output 301).

In embodiments, the power component 11 is configured to provide power to a load 12, wherein the power provided to the load cycles between a high-load element and a low-load element. As used herein, a "high-load element" refers to a power usage indication, such as a power measurement (e.g., in Watts) or a relative power measurement (e.g., rated power percentage) that is greater than a power usage indication of a low-load element. Similarly, a "low-load element" refers to a power usage indication, such as a power measurement (e.g., in Watts) or a relative power measurement (e.g., rated power percentage) that is less than a power usage indication of a high-load element. For example, a high-load element may include a portion of the load cycle where the server processors 106 are utilizing power at approximately 100% of their rated power, and a low-load element may include a portion of the load cycle where the server processors 106 are utilizing power at approximately 20% of their rated power, as shown in FIG. 3. The percentage of rated power and/or wattage, used for the high-load element and the low-load element are variable, with the distinction that the amount of power used for the high-load element is higher than the low-load element.

Referring to FIG. 3, the server load profile may include one or more variable load periods 302a-b where the rated power percentage fluctuates between a high-load element and a low-load element. For example, for a server load profile of one or more server processors 106 running Al training software during a variable load period 302a, the server load profile may include multiple low-load elements (e.g., with rated power percentages of approximately 20%) where data is being collected for analysis, followed by multiple high-load elements (e.g., with rated power percentages of approximately 100%) where the collected data is being analyzed. The server load profile may also include interim load periods 304 of relatively low power usage between the variable load periods 302a-b.

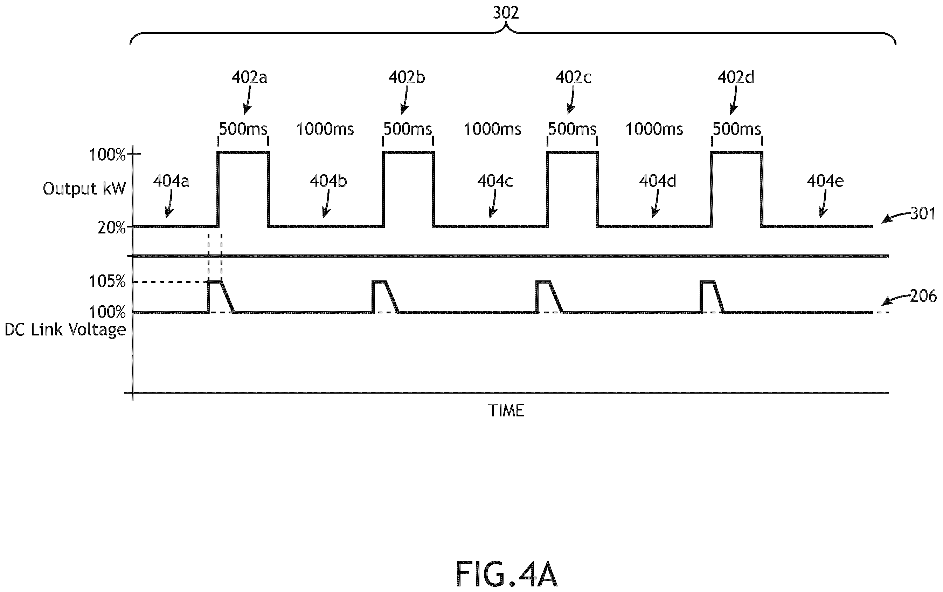

FIGS. 4A-4B illustrate graphs 400 depicting a variable load period 302 of a load output 301 within a server load profile, in accordance with one or more embodiments of the disclosure. The graph also depicts a DC link voltage 206. The variable load period 302 includes several high-load elements 402a-d and low-load elements 404a-e.

In embodiments, the one or more device processors 120 are configured to obtain load data, wherein the load data comprises a power characteristic associated with at least one of the high-load element 402a-d or the low-load element 402a-e. For example, the one or more device processors 120 may be configured to sense and record power usage (e.g., power characteristics such as rated power percentage, wattage, voltages, amperages) over time. For instance, the one or more device processors 120 may be configured to sense (e.g., sense directly or receive sensor data from power sensors), and/or record variable load periods 302, along with the length and/or intensity of the high-load elements 402a-d and low-load elements 404a-e within the variable load periods 302. In another instance, the one or more device processors 120 may sense (e.g., sense directly or receive sensor data from power sensors), and/or record interim load periods 304. In another instance, the one or more device processors 120 may sense (e.g., sense directly or receive sensor data from power sensors), and/or record DC link voltages 206. The load data may be stored in device memory 122.

In embodiments, the one or more device processors 120 are configured to obtain a trained power management AI/ML model 124. For example, obtaining a trained power management AI/ML model 124 may include using supervised, unsupervised, or reinforced learning techniques. For instance, in the case of unsupervised learning, the power management Al/ML model 124 may autonomously explore and learn from labeled or unlabeled data to discover underlying patterns and structures. In another instance, the training may include incorporating feedback loops, enabling the power management Al/ML model 124 to iteratively refine its understanding and improve performance across a range of tasks. In another instance, training may include a dynamic adaptation mechanism that adjusts the balance between different learning modes (e.g., supervised, unsupervised and/or reinforced learning modes) based on the complexity and nature of the data, ensuring learning efficiency and adaptability to varying environments. In particular, the one or more device processors 120 may be configured to receive data associated with load data, train the battery management Al/ML model 124 based on the load data (e.g., power characteristics associated with the high-load element 402a-d, low-load element 404a-e, and DC link voltage 206), then, utilizing the trained power management AI/ML model 124 cause the power component 11 to anticipate high-load elements 402a-d and low-load elements 404a-e, particularly high-load elements 402a-d and low-load elements 404a-e where adjustment of DC link voltages 206 can be made so that the power component does not rely on the battery 114 to supply power during high-load element periods of the load 12.

In embodiments, training the power management Al/ML model 124 may include using supervised learning models including, but not limited to, linear regression, logistic regression, decision trees, random forests, support vector machines (SVM), k-nearest neighbors (k-NN), gradient boosting machines (GBM), and neural networks. In embodiments, training the power management Al/ML model 124 may include using unsupervised learning models including, but not limited to, k-means clustering, hierarchical clustering, Gaussian mixture models (GMM), principal component analysis (PCA), and t-distributed stochastic neighbor embedding (t-SNE). In embodiments, training the battery management AI/ML model 124 may include using reinforcement learning models including, but not limited to, Q-learning, deep Q-networks (DQN), and policy gradient methods. Training the battery management AI/ML model 124 may further utilize generative models such as variational autoencoders (VAE), generative adversarial networks (GAN), and Boltzmann machines.

In embodiments, the one or more device processors 120 are configured to, based on the power output data and the trained power management Al and/or ML model, infer a DC link voltage adjustment, wherein the DC link voltage adjustment is correlated with a predicted load cycle parameter (e.g., such as a predicted power characteristic associated with a predicted high-load element 402a-d, such as a start time, or predicted low-load element 404a-e). For example, and referring to FIG. 4A, if the one or more device processors 120 predict the timing and amplitude of high-load element 402a, the one or more device processors 120 may infer that the DC link voltage 206 be raised (e.g., from an initial DC link voltage 206 of 100% to an adjusted DC link voltage 206 of 105%). For example, if the DC link voltage 206 is raised 5% before (e.g., 50 ms before) the high-load element 402a occurs, the sudden increased load will not cause the power component 11 to draw power from the battery 114, increasing the life of the battery 114. After the transition of the load to the high-load element 402a, the DC power link is reduced to the initial level until the next high-load element 402b is predicted to occur.

The adjustment of the DC link voltage 206 may include any adjustment that causes the power component to run more efficiently, such as reducing the use of discharging the battery 114. For example, the adjustment of the DC link voltage 206 may include an adjustment of approximately 1%, approximately 2.5%, approximately 5%, approximately 7.5%, or approximately 10% of the initial DC link voltage 206. The DC link voltage 206 may be a positive adjustment or a negative adjustment.

In embodiments, the one or more device processors 120 cause the power component 11 to alter the DC link voltage 206 based on the link voltage adjustment. Altering the DC link voltage 206 may be performed via control circuitry, such as rectifier control circuitry, which is under the control of the one or more device processors 120. For example, and referring to FIG. 4A, if the one or more device processors 120 infers that a positive link voltage adjustment should be made for a predicted high-load element 402, then the one or more device processors 120 may cause the one or more rectifiers 200 to increase the DC link voltage 206 by five percent. In another example, if a long interim load period 304 is predicted, then the one or more device processors 120 may delay raising the DC link voltage 206. In another example, the one or more device processors 120 may infer that a negative voltage adjustment be made.

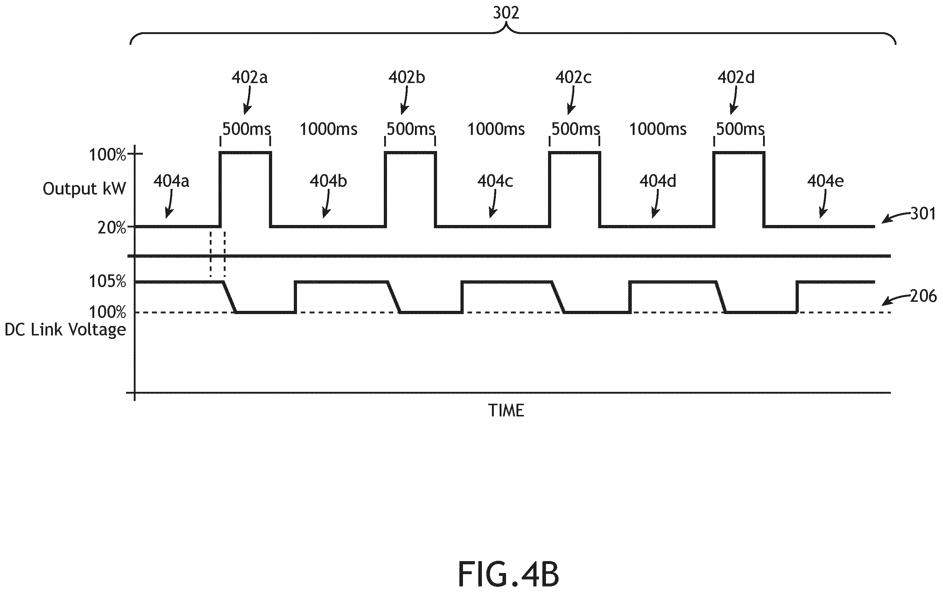

In an alternative embodiment, the one or more device processors 120 may infer that the DC link voltage 206 be raised when a variable load period 302 is predicted (e.g., the variable load period being a predicted load cycle parameter), as shown in graph 408 of FIG. 4B. For example, once a variable load period 302 is predicted, the one or more device processors 120 may cause the rectifier control circuitry to increase the DC Link voltage 206 to an adjusted level. Then, after a predicted or detected load change to a high-load element 402 has occurred, the DC Link voltage 206 is reduced, having buffered the increase in load 12. Afterwards, when the load 12 changes from the high-load element 402 to the low-load element 404, the DC Link Voltage 206 is increased back to the adjusted level, and the process repeats.

In embodiments, the one or device processors 120 are configured to sense and/or detect if the DC link voltage 206 has been increased for a period of time and the load 12 has not changed from a low-load element 404 to a high-load element 402, such as when the one or more server processors 106 have entered into an interim load period 304. For example, upon the detection of an interim load period 304 by the one or more device processors (e.g., via the power output data and the trained Al and/or ML model 124), the one or more device processors 120 may cause the DC link voltage 206 to lower to an initial level (e.g., 100%) until the next load change from the low-load element 404 to the high-load element 402.

In embodiments, the one or more device processors are configured to cause the DC link voltage 206 to remain the same, reduce, or remain under a critical limit after the load 12 changes from a high-load element 402 to a low-load element 404. For example, when a load 12 changes from a high-load element 402 to a low-load element 404, the DC link voltage 206 will generally increase. This anticipated increase in DC link voltage 206 may then be anticipated by the power component 11 (e.g., via the trained Al and/or ML model 124). The trained Al and/or ML model 124 may then provide an algorithm that can assist in determining that the load 12 is variable, and that lowering the DC link voltage 206 by a small amount (e.g., 5%) just before the load 12 changes from the high-load element 402 to the low-load element 404 so that any voltage increase will be below critical limits.

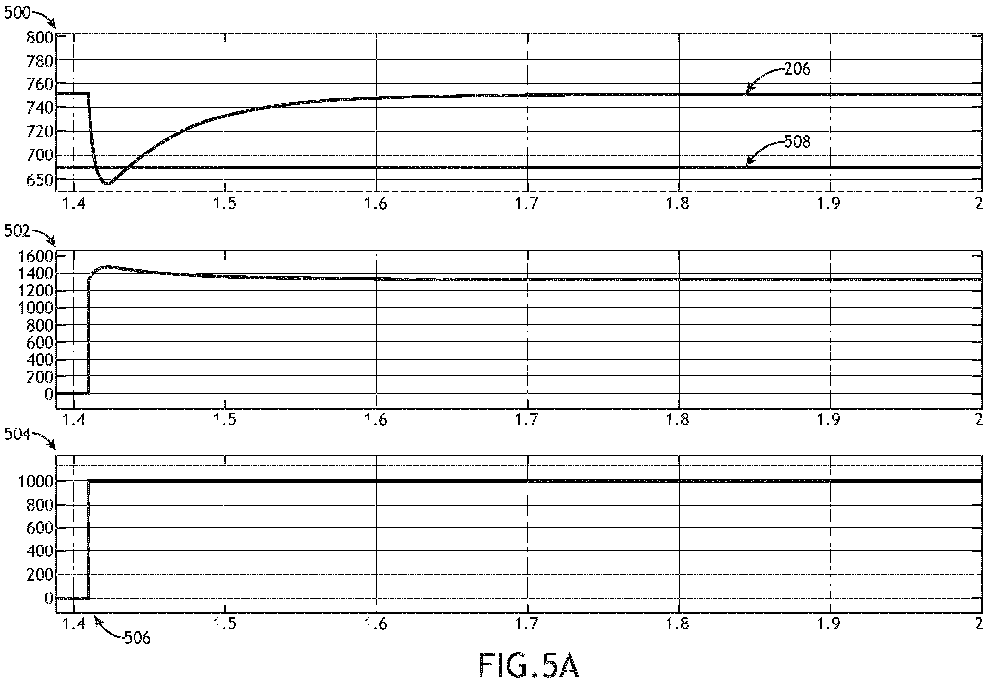

FIG. 5A illustrates graphs 500, 502, 504 depicting DC link voltage 206, load current, and output power, respectively, for a power supply that cannot anticipate a change in load from a low-load element 404 to a high-load element 402 at timepoint 506, in accordance with one or more embodiments of the disclosure. For example, at timepoint 506, when the load current and the output power of the load spike, the DC link voltage 206 falls below a voltage threshold 508, requiring an energy discharge from the battery 114 to power the one or more server processors 106. The greater the fall of the DC link voltage below the voltage threshold 508, the greater amount of discharge needed from the battery 114.

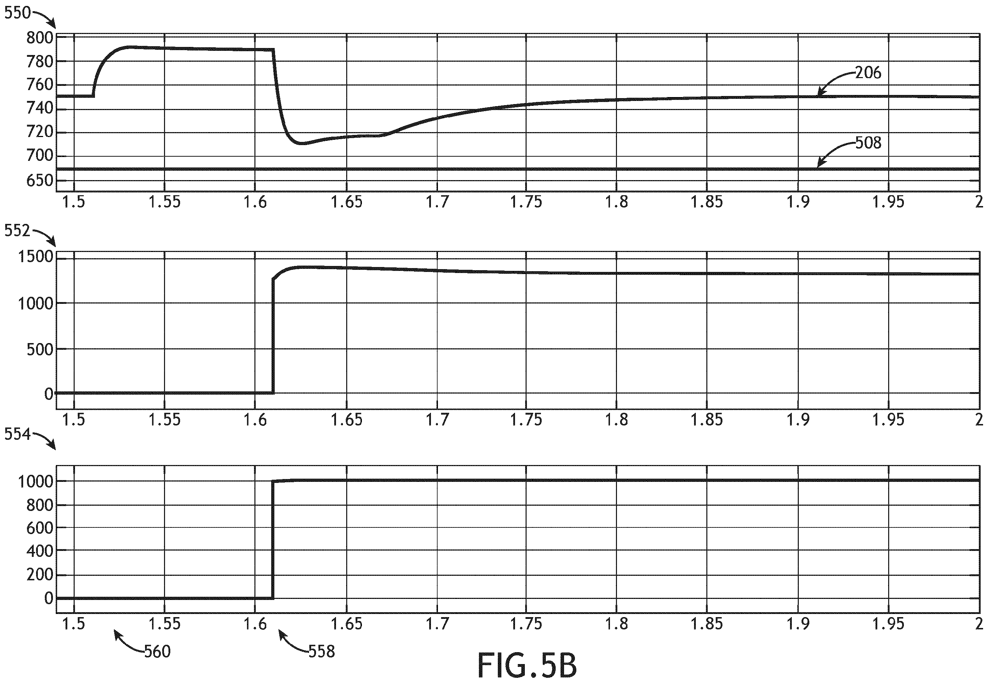

FIG. 5B illustrates graphs 550, 552, 554 depicting DC link voltage 206, load current, and output power, respectively, for a power component 11 of the current disclosure that can anticipate a change in load 12 from a low-load element 404 to a high-load element 402 at timepoint 558, in accordance with one or more embodiments of the disclosure. For example, because the one or more device processors 120 can anticipate the change in load 12 from the low-load element 404 to the high-load element 402 at timepoint 506, the one or more device processors 120 cause the DC link voltage 206 to be raised at an earlier timepoint 560. Raising the DC link voltage 206 before the anticipated change from the low-load element 404 to the high-load element 402 prevents the DC link voltage from falling below the voltage threshold 508, which correspondingly prevents the need for energy from a supplemental voltage source, such as from the battery 114 (e.g., if the DC link voltage 206 voltage falls below the voltage threshold 508, the battery 114 would need to be discharged). By preventing the battery 114 from discharging, the lifetime of the battery is increased.

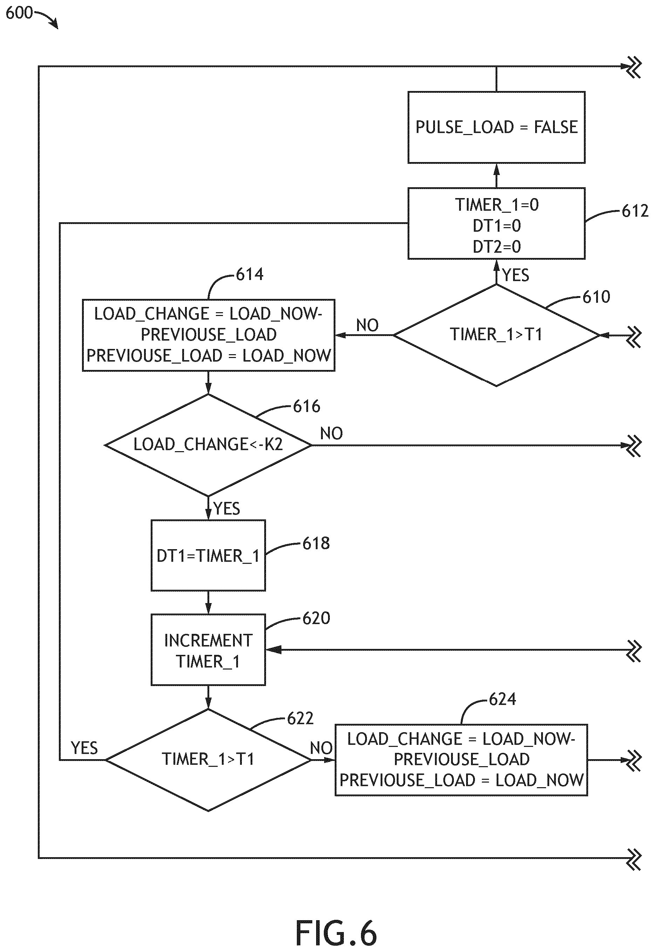

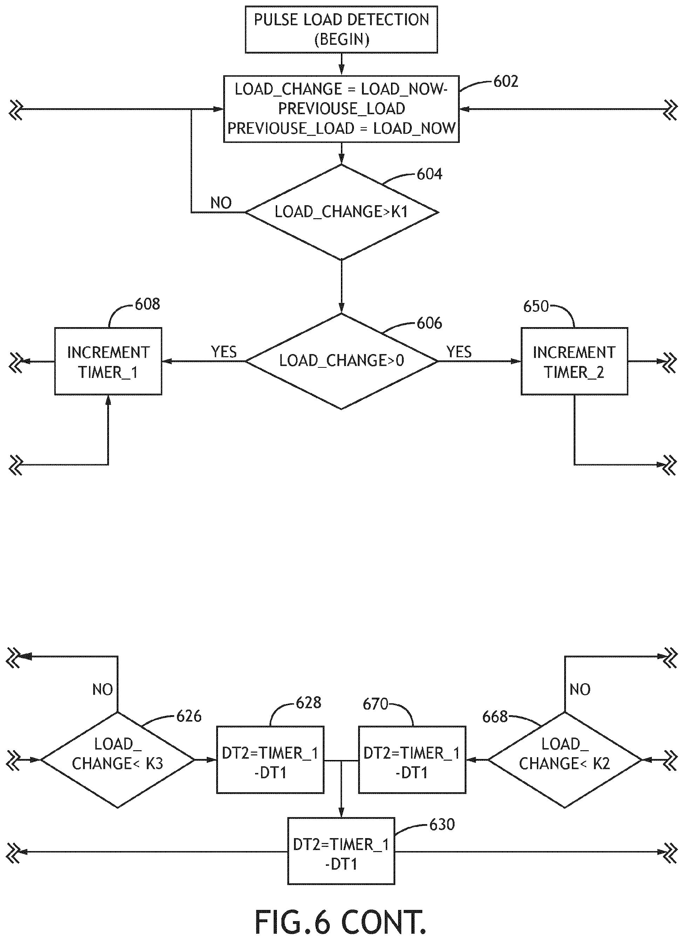

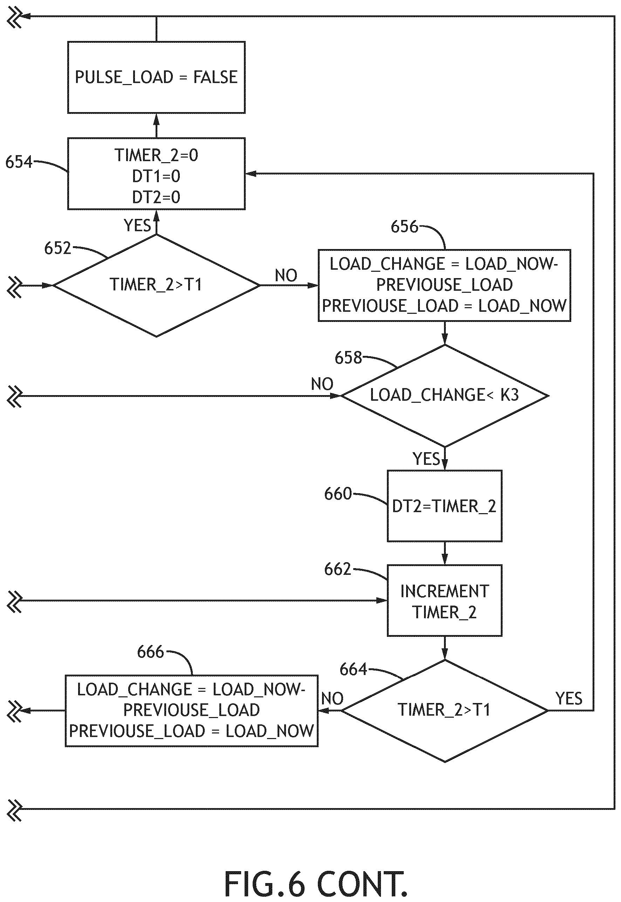

FIG. 6 illustrates a flowchart depicting a method 600 for variable load detection, in accordance with one or more embodiments of the disclosure. For example, the method 600 may include a step 602 of calculating the load change from one period to the next (e.g., Load_Change = Load_Now - Previous_Load). The method 600 may further include a step 604 of comparing an absolute value of Load_Change to some adjustable threshold (e.g., k1). For example, if the Load_Change is greater than k1, then check if the Load_Change is positive or negative at a step 606.

In embodiments, the method includes steps for determining a positive load change. For example, the method 600 may include Incrementing a timer, Timer_1, at a step 608. If Timer_1 exceeds some adjustable limit, T1 (e.g., as determined in step 610) before a negative load change is detected, reset the Pulse Load Detection algorithm, as shown in a step 612. Otherwise, continue to calculate the Load_Change in a step 614. If there is a load change from a large value to a small value (e.g., a negative load change, that is larger than some threshold, "k2", as determined in a step 616), save the Timer_1 value in a variable called DT1 in a step 618. The method 600 then continues to increment Timer_1 in a step 620. If Timer_1 exceeds some adjustable limit as determined in a step 622, T1, before a negative load change is detected, as determined in a step 622, reset the Pulse Load Detection algorithm as shown in step 612. Otherwise, continue to calculate the Load_Change in a step 624. If there is a load change from a small value to a large value (e.g., a positive load change, that is larger than some threshold, "k3", as determined in a step 626), calculate the time between load changes (e.g., DT2 = Timer_1 - DT1) as shown in a step 628. If a pulsing load has been detected, set Pulse_Load = TRUE in a step 630.

In embodiments, the method 600 includes steps for determining a positive load change. For example, the method may include a step 650 for incrementing a timer, Timer_2. If Timer_2 exceeds some adjustable limit, T1, before a negative load change is detected, as determined in a step 652, then reset the Pulse Load Detection algorithm in a step 654. Otherwise continue to calculate the Load_Change in a step 656. If there is a load change from a small value to a large value (e.g., a positive load change that is larger than some threshold, "k3", as determined in a step 658, then save the Timer_2 value in a variable called DT2, as shown in a step 660. The method 600 may further include continuing to increment Timer_2 in a step 662. If Timer_2 exceeds some adjustable limit, T1, before a negative load change is detected, as determined in a step 664, reset the Pulse Load Detection algorithm, as shown in step 654. Otherwise, continue to calculate the Load_Change in a step 666. If there is a load change from a large value to a small value, (e.g., a negative load change, that is larger than some threshold, "k2", as determined in a step 668, save the calculate the time between load changes (e.g., DT1 = Timer_2 - DT2) as shown in a step 670, If a pulsing load has been detected, set Pulse_Load = TRUE as per step 630. By determining the time between the load increase (DT1) and load decrease (DT2) the algorithm will anticipate the next load increase and raise the voltage just before the load change.

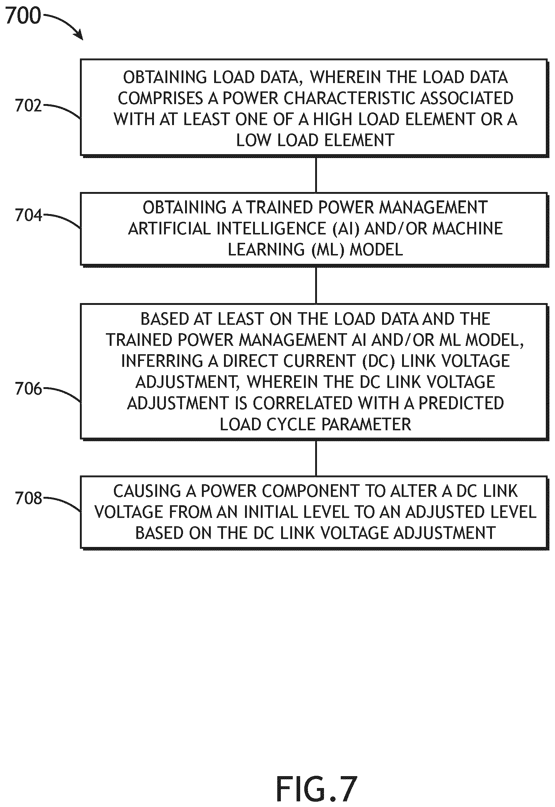

FIG. 7 illustrates a process flow diagram depicting a method 700 for controlling a DC link voltage of a power component 11, in accordance with one or more embodiments of the disclosure. The method 700 may be used to control and/or adjust a DC link voltage 206, as described herein. The method 700 enables the power component 11 to predict variable loads and variable load elements (e.g., high-load elements 402 and low-load elements 404). By controlling and/or adjusting the DC link voltage 206, the frequency and amplitude of battery discharges may be reduced, potentially increasing the life of the battery 114 and/or other power component elements.

In embodiments, the method 700 includes a step 702 of obtaining load data, wherein the load comprises a power characteristic associated with at least one of a high-load element 402 or a low-load element 404. For example, the method 700 may include obtaining data associated with the amplitude and timing of high-load elements 402.

In embodiments, the method includes a step 704 of obtaining a trained power management AI/ML model 124. Obtaining and/or training a trained power management Al/ML model 124 may include any AI/ML training models and methods as described herein. For example, obtaining and/or training a trained power management AI/ML model 124 may include deriving an algorithm (e.g., model) used to detect that the load is variable repeatedly changing from a high-load element 402 or a low-load element 404 over a given interval. In another example, the algorithm may be used to determine, or otherwise be modified to determine, a predicted high-load element 402 or a low-load element 404 that may occur in the future and/or a length of a high-load element 402 or a low-load element 404 that may occur in the future. In another example, the algorithm may be used to determine the length of a variable load period 302 and/or an interim load period 304.

In embodiments, the method 700 includes a step 706 of, based at least on the power output data and the trained power management Al and/or ML model, inferring a DC link voltage adjustment, wherein the DC link voltage adjustment is correlated with a predicted load cycle parameter, as described herein. In embodiments, the method 700 includes a step 708 of causing the power component to alter a DC link voltage 206 from an initial level to an adjusted level based on the DC link voltage adjustment.

For example, once the DC link voltage adjustment is inferred by the one or more device processors 120 via the power management AL/ML model 124, the one or more device processors 120 may directly or indirectly via rectifier control cause the DC link voltage 206 to be set based on the inferred DC link voltage adjustment.

It is noted herein the methods 600, 700 are not limited to the steps and/or sub-steps provided. The methods 600, 700 may include more or fewer steps and/or sub-steps. In addition, the methods 600, 700 may perform the steps and/or sub-steps simultaneously. Further, the methods 600, 700 may perform the steps and/or sub-steps sequentially, including in the order provided or an order other than provided. Therefore, the above description should not be interpreted as a limitation on the scope of the disclosure but merely an illustration.

In embodiments, the DC link voltage adjustment may include a rate of change. For instance, the DC link voltage 206 may be increased or decreased via a step function, a predetermined linear function of time, or may include a change based on a measured internal variable including, but not limited to, the anticipated load 12.

In embodiments, the power component 11 is configured to set a DC link voltage 206 of another power component 11 in accordance with the inferred DC link voltage adjustment, such as a DC link voltage 206 of another power component 11 within the power supply system 10. For example, if a power component 11, such as an UPS infers a DC link voltage adjustment based on power load data, the UPS may then control the setting of a DC link voltage 206 of another power component, such as an STS, within the power supply system 10. In this manner, any one of the power components 11 may then control a setting on another power component 11, lessening the need for multiple trained power management AI/ML models.

In embodiments, a master controller is configured to set a DC link voltage 206 for one or more power components 11 of the power supply system 10. For example, the power supply system 10 may include a master controller that can obtain load data, obtain a trained power management AI/ML model, infer a DC link voltage adjustment, and then set a DC link voltage 206 for one or more power components (e.g., a UPS and an STS) of the power supply system 10.

The one or more device processors 120 of the control unit 118 may include any processor or processing element known in the art. For the purposes of the present disclosure, the term "processor" or "processing element" may be broadly defined to encompass any device having one or more processing or logic elements (e.g., one or more micro-processor devices, one or more application specific integrated circuit (ASIC) devices, one or more field programmable gate arrays (FPGAs), or one or more digital signal processors (DSPs)). In this sense, the one or more device processors 120 may include any device configured to execute algorithms and/or instructions (e.g., program instructions stored in memory). In some embodiments, the one or more device processors 120 may be embodied as a desktop computer, mainframe computer system, workstation, image computer, parallel processor, networked computer, or any other computer system configured to execute program instructions. Further, the steps described throughout the present disclosure may be carried out by a single controller or, alternatively, multiple controllers. Additionally, the control unit 118 may include one or more controllers housed in a common housing or within multiple housings.

The device memory 122 may include any storage medium known in the art suitable for storing program instructions executable by the associated one or more device processors 120. For example, the device memory 122 may include a non-transitory memory medium. By way of another example, the device memory 122 may include, but is not limited to, a read-only memory (ROM), a random-access memory (RAM), a magnetic or optical memory device (e.g., disk), a magnetic tape, a solid-state drive and the like. It is further noted that the device memory 122 may be housed in a common controller housing with the one or more device processors 120. In some embodiments, the device memory 122 may be located remotely with respect to the physical location of the one or more device processors 120 and the control unit 118. For instance, the one or more device processors 120 of the control unit 118 may access a remote memory (e.g., server), accessible through a network (e.g., internet or intranet).

Also disclosed herein are the following numbered clauses:
1. A system comprising: a power component configured to provide power to a load, wherein the power provided to the load cycles between a high-load element and a low-load element, the power component comprising: at least one device processor configured to: obtain load data, wherein the load data comprises a power characteristic associated with at least one of the high-load element or the low-load element; obtain a trained power management artificial intelligence "Al" and/or machine learning "ML" model; based at least on the load data and the trained power management Al and/or ML model, infer a direct current "DC" link voltage adjustment, wherein the DC link voltage adjustment is correlated with a predicted load cycle parameter; and cause the power component to alter a DC link voltage from an initial level to an adjusted level based on the DC link voltage adjustment.
2. The system of clause 1, wherein the predicted load cycle parameter comprises a predicted high-load element start time, wherein the DC link voltage is increased to the adjusted level in anticipation of the high-load element start time.
3. The system of clause 2, wherein increasing the DC link voltage to the adjusted level prevents the DC link voltage from falling below a voltage threshold that would require a supplemental voltage source.
4. The system of clause 3, wherein the supplemental voltage source comprises a battery.
5. The system of any of clauses 2 to 4, wherein after the high-load element has initiated, the DC link voltage is altered from the adjusted level to the initial level.
6. The system of any preceding clause, wherein the predicted load cycle parameter comprises a variable load period comprising a plurality of the high-load elements and the low-load elements, wherein upon entering the variable load period, the DC link voltage is increased to the adjusted level.
7. The system of clause 6, wherein, after entering the high-load element, the DC link voltage is decreased for a portion of at least one of the predicted high-load element or the low-load element.
8. The system of any preceding clause, wherein the adjusted level of the DC voltage is approximately five percent greater than the initial level of the DC link voltage.
9. The system of any preceding clause, further comprising a power unit configured to provide power conversion for the power component as power is transferred to the load.
10. The system of clause 9, further comprising a battery electrically coupled to the power unit.
11. The system of clause 10, wherein the battery is communicatively coupled to the device processor.

The herein described subject matter sometimes illustrates different components contained within, or connected with, different other components. It is to be understood that such depicted architectures are merely exemplary, and that in fact many other architectures can be implemented which achieve the same functionality. In a conceptual sense, any arrangement of components to achieve the same functionality is effectively "associated" such that the desired functionality is achieved. Hence, any two components herein combined to achieve a particular functionality can be seen as "associated with" each other such that the desired functionality is achieved, irrespective of architectures or intermedial components. Likewise, any two components so associated can also be viewed as being "operably connected", or "operably coupled", to each other to achieve the desired functionality, and any two components capable of being so associated can also be viewed as being "operably couplable", to each other to achieve the desired functionality. Specific examples of operably couplable include but are not limited to physically mateable and/or physically interacting components and/or wirelessly interactable and/or wirelessly interacting components and/or logically interacting and/or logically interactable components.

Those skilled in the art will recognize that it is common within the art to describe devices and/or processes in the fashion set forth herein, and thereafter use engineering practices to integrate such described devices and/or processes into power and/or data processing systems. That is, at least a portion of the devices and/or processes described herein can be integrated into a data processing system via a reasonable amount of experimentation. Those having skill in the art will recognize that a typical power and/or data processing system generally includes one or more of a system unit housing, a video display device, a memory such as volatile and non-volatile memory, processors such as microprocessors and digital signal processors, computational entities such as operating systems, drivers, graphical user interfaces, and applications programs, one or more interaction devices, such as a touch pad or screen, and/or control systems including feedback loops and control motors (e.g., feedback for sensing position and/or velocity; control motors for moving and/or adjusting components and/or quantities). A typical power and/or data processing system may be implemented utilizing any suitable commercially available components, such as those typically found in power and/or data computing/communication and/or network computing/communication systems.

It is further contemplated that each of the embodiments of the method described above may include any other step(s) of any other method(s) described herein. In addition, each of the embodiments of the method described above may be performed by any of the systems described herein.

It will be understood by those within the art that, in general, terms used herein, and especially in the appended claims (e.g., bodies of the appended claims) are generally intended as "open" terms (e.g., the term "including" should be interpreted as "including but not limited to," the term "having" should be interpreted as "having at least," the term "includes" should be interpreted as "includes but is not limited to," etc.).

While particular aspects of the present subject matter described herein have been shown and described, it will be apparent to those skilled in the art that, based upon the teachings herein, changes and modifications may be made without departing from the subject matter described herein and its broader aspects and, therefore, the appended claims are to encompass within their scope all such changes and modifications as are within the scope of the subject matter described herein. Furthermore, it is to be understood that the invention is defined by the appended claims.

## Claims

1. A power component configured to provide power to a load comprising:
at least one device processor configured to:
obtain load data, wherein the load data comprises a power characteristic associated with at least one of a high-load element or a low-load element;
obtain a trained power management artificial intelligence "Al" and/or machine learning "ML" model;
based at least on the load data and the trained power management Al and/or ML model, infer a direct current "DC" link voltage adjustment, wherein the DC link voltage adjustment is correlated with a predicted load cycle parameter; and
cause the power component to alter a DC link voltage from an initial level to an adjusted level based on the DC link voltage adjustment.

2. The power component of claim 1, wherein the predicted load cycle parameter comprises a predicted high-load element start time, wherein the DC link voltage is increased to the adjusted level in anticipation of the high-load element start time.

3. The power component of claim 2, wherein increasing the DC link voltage to the adjusted level prevents the DC link voltage from falling below a voltage threshold that would require a supplemental voltage source.

4. The power component of claim 3, wherein the supplemental voltage source comprises a battery.

5. The power component of claim 13, wherein, after the high-load element has initiated, the DC link voltage is altered from the adjusted level to the initial level.

6. The power component of any preceding claim, wherein the predicted load cycle parameter comprises a variable load period comprising a plurality of the high-load elements and the low-load elements, wherein upon entering the variable load period, the DC link voltage is increased to the adjusted level.

7. The power component of claim 6, wherein after entering the high-load element, the DC link voltage is decreased for a portion of at least one of the predicted high-load element or the low-load element.

8. The power component of any preceding claim, wherein the power component is configured as an uninterruptible power supply "UPS".

9. The power component of any preceding claim, wherein the adjusted level of the DC voltage is approximately five percent greater than the initial level of the DC link voltage.

10. A system comprising a power component according to any preceding claim, the power component configured to provide power to the load, wherein the power provided to the load cycles between the high-load element and the low-load element.

11. The system of claim 10, further comprising a power unit configured to provide power conversion for the power component as power is transferred to the load.

12. The system of claim 11, further comprising a battery electrically coupled to the power unit.

13. The system of claim 12, wherein the battery is communicatively coupled to the device processor.

14. A method for providing power to a load comprising:
obtaining load data, wherein the load data comprises a power characteristic associated with at least one of a high-load element or a low-load element;
obtaining a trained power management artificial intelligence "Al" and/or machine learning "ML" model;
based at least on the load data and the trained power management Al and/or ML model, inferring a direct current "DC" link voltage adjustment, wherein the DC link voltage adjustment is correlated with a predicted load cycle parameter; and
causing a power component to alter a DC link voltage from an initial level to an adjusted level based on the DC link voltage adjustment.
